# EUROPEAN PATENT SPECIFICATION

(11) **EP 4 138 375 B1**
(45) Date of publication and mention of the grant of the patent: **09.09.2026**
(21) Application number: 21789137.3
(22) Date of filing: 13.04.2021
(51) Int. Cl.: H04M 1/72448, G06F 3/16, H04R 3/12, H04M 1/72409, H04M 1/72469, H04M 1/60

(54) **AUDIO OUTPUT MODE SWITCHING METHOD AND ELECTRONIC DEVICE**
AUDIOAUSGABEMODUSUMSCHALTVERFAHREN UND ELEKTRONISCHE VORRICHTUNG
PROCÉDÉ DE COMMUTATION DE MODE DE SORTIE AUDIO ET DISPOSITIF ÉLECTRONIQUE

(30) Priority: 16.04.2020 CN 202010299922
(43) Date of publication of application: 22.02.2023
(73) Proprietor: Vivo Mobile Communication Co., Ltd., Dongguan, Guangdong 523863 (CN)
(72) Inventor: LI, Renjun, Dongguan, Guangdong 523863 (CN)
(74) Representative: Lavoix
(86) International application number: PCT/CN2021/086845
(87) International publication number: WO 2021/208893

(56) References cited:
- WO-A1-2020/063605
- CN-A- 103 593 127
- CN-A- 107 426 443
- CN-A- 107 959 903
- CN-A- 110 995 930
- CN-A- 111 526 248
- US-A1- 2011 159 925
- US-A1- 2016 291 931
- US-A1- 2016 370 983

## Description

### TECHNICAL FIELD

The present invention relates to the field of communication technologies, and in particular, to an audio output mode switching method and an electronic device.

### BACKGROUND

With the rapid development of communication technologies, electronic devices such as a mobile phone and a tablet computer have become one of indispensable electronic products in people's daily life. Currently, an electronic device can usually be connected to a wireless earphone, to facilitate people to conduct recreational activities such as performing voice instant messaging, viewing videos, and listening to music. However, in a case that the electronic device is connected to the wireless earphone, if a user wants to change an audio output mode, the user needs to exit an audio playback application first, then disconnect the electronic device from the wireless earphone or turn off the wireless earphone, and subsequently, select audio playback. As a result, the user needs to perform a plurality of operations to achieve a change of the audio output mode.

In prior art, US 2016/370983 A1 discloses a method for outputting target content, including the following steps: S101: acquiring a target content and displaying the target content logo; S102: determining corresponding output modes based on the target content, and displaying a preset area corresponding to each of the output modes; S103: when it is detected that the target content logo is dragged to at least one of the preset areas, outputting the target content in the output mode corresponding to the preset area.

As can be seen, an existing electronic device has a problem that the operations of switching the audio output mode are relatively cumbersome.

### SUMMARY

Embodiments of the present invention provide an audio output mode switching method and an electronic device, to resolve a problem that operations of switching an audio output mode are relatively cumbersome in an existing electronic device. The invention is set out in the appended set of claims.

In the embodiments of the present invention, in a case that the first electronic device displays the audio information, and outputs the audio in the first audio output mode, the first electronic device switches the output mode of the audio into the second audio output mode if receiving the target input for the audio information, so that the first electronic device can switch, based on the target input, the output mode of the audio into a mode in which the audio is outputted through the first electronic device or a mode in which the audio is outputted through the second electronic device. In this way, a user can switch the audio output mode through merely one target input, which simplifies operations of the user, and enables the first electronic device to perform operations of switching the audio output mode more simple and fast.

### BRIEF DESCRIPTION OF THE DRAWINGS

To describe the technical solutions in embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a flowchart of an audio output mode switching method according to an embodiment of the present invention;
FIG. 1a is a schematic diagram of a scenario of a display interface of an electronic device to which the audio output mode switching method provided in FIG. 1 is applied;
FIG. 2 is a flowchart of another audio output mode switching method according to an embodiment of the present invention;
FIG. 3 is a structural diagram of an electronic device according to an embodiment of the present invention; and
FIG. 4 is a structural diagram of another electronic device according to an embodiment of the present invention.

### DETAILED DESCRIPTION

The following clearly and completely describes the technical solutions in embodiments of the present invention with reference to the accompanying drawings in the embodiments of the present invention. Apparently, the described embodiments are some of the embodiments of the present invention rather than all of the embodiments. The present invention is defined by the attached independent claims. Advantageous embodiments are described in the attached dependent claims. Embodiments and/or examples mentioned in the description that do not fall under the scope of the claims are useful for understanding the present invention.

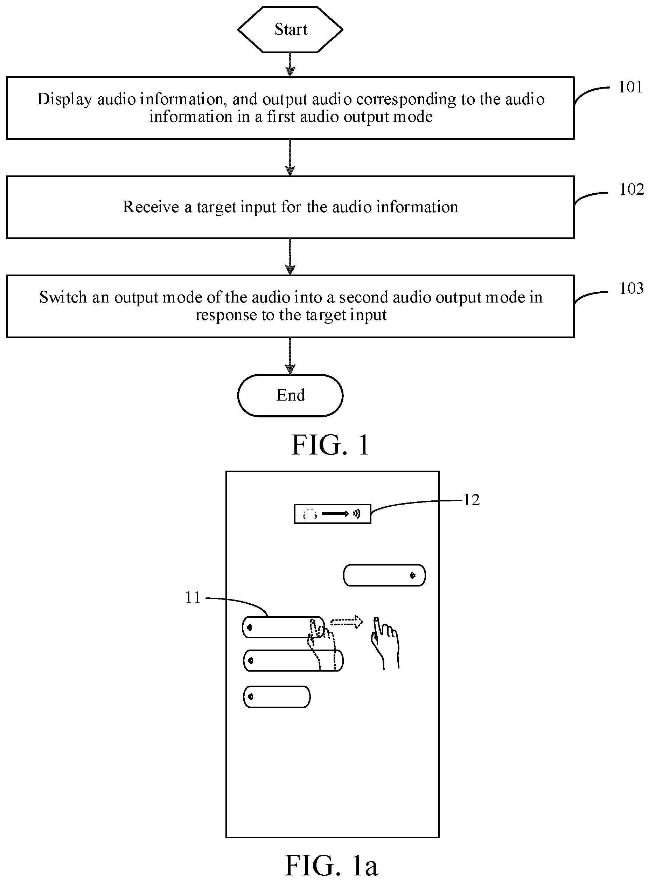

FIG. 1 is a flowchart of an audio output mode switching method according to an embodiment of the present invention. As shown in FIG. 1, the audio output mode switching method includes the following steps:
Step 101. Display audio information, and output audio corresponding to the audio information in a first audio output mode.

It should be noted that the method provided in this embodiment of the present invention is applied to a first electronic device, where the first electronic device is in a wireless connection with a second electronic device. The first electronic device and the second electronic device are both devices capable of implementing audio playback. For example, the first electronic device is a mobile phone, and the second electronic device is a wireless earphone; or the first electronic device is a mobile phone, and the second electronic device is an other mobile phone, or the like.

In this embodiment of the present invention, in a case that the first electronic device displays the audio information, the audio corresponding to the audio information may be outputted in the first audio output mode. For example, referring to FIG. 1a, in a case that the first electronic device displays a running interface of an instant messaging application, the audio information 11 is voice communication information displayed on the running interface, and the audio is corresponding voice content; and in a case that the first electronic device displays a running interface of a music application, the audio information is a music menu displayed on the running interface of the music application, and the audio is corresponding music.

It should be noted that the first audio output mode is a mode in which the audio is outputted through one of the first electronic device and the second electronic device. For example, in a case that the second electronic device is a wireless earphone, and the first electronic device is in a wireless connection with the wireless earphone, the first audio output mode is a mode in which the audio is outputted through the wireless earphone.

Step 102. Receive a target input for the audio information.

In this embodiment of the present invention, the target input may refer to a trigger operation received by and acting on the first electronic device, for example, the target input is a swipe input by a user acting on the audio information; or, the target input may refer to a trigger operation received by the first electronic device and acting on the second electronic device, for example, the target input is a trigger operation of the user acting on the second electronic device.

Step 103. Switch an output mode of the audio into a second audio output mode in response to the target input.

the first audio output mode is a mode in which the audio is outputted through one of the first electronic device and the second electronic device, and the second audio output mode is a mode in which the audio is outputted through the other of the first electronic device and the second electronic device.

It may be understood that if the first audio output mode is a mode in which the audio is outputted through the first electronic device, in a case that the first electronic device receives the target input for the audio information, for example, a left-to-right swipe operation of the user acting on the audio information, the output mode of the audio is switched into a mode in which the audio is outputted through the second electronic device; and if the first audio output mode is a mode in which the audio is outputted through the second electronic device, in a case that the target input for the audio information is received, the output mode of the audio is switched into a mode in which the audio is outputted through the first electronic device.

According to the technical solution provided in this embodiment of the present invention, in a case that the first electronic device displays the audio information and outputs the audio in the first audio output mode, the first electronic device switches the output mode of the audio into the second audio output mode if receiving the target input for the audio information, so that the first electronic device can switch, based on the target input, the output mode of the audio into the mode in which the audio is outputted through the first electronic device or the mode in which the audio is outputted through the second electronic device. In this way, a user can switch the audio output mode through merely one target input, which simplifies operations of the user, and enables the first electronic device to perform operations of switching the audio output mode more simple and fast.

For example, in an optional implementation of this embodiment of the present invention, the second electronic device is a wireless earphone, and the first audio output mode is a mode in which the audio is outputted through the wireless earphone. Step 102 may include:
receiving a target input acting on either of a left earphone and a right earphone of the wireless earphone, where at least one of the left earphone and the right earphone is in an unworn state; and
step 103 may include:
   switching the output mode of the audio into a mode in which the audio is outputted through a speaker in response to the target input.

In this implementation, in a case that the first electronic device is in a wireless connection with the wireless earphone, audio of the first electronic device is outputted through the wireless earphone. It may be understood that the wireless earphone includes a left earphone and a right earphone. In a case that the user removes one of the earphones, for example, the left earphone, the left earphone is in an unworn state. In this case, if the user acts on the left earphone or the right earphone to perform a target input, for example, a double-click operation, the wireless earphone may send a target instruction to the first electronic device, so that the first electronic device obtains, according to the received target instruction, the target input by the user acting on the wireless earphone, and then the first electronic device switches the output mode of the audio into a mode in which the audio is outputted through a speaker. In this case, the wireless earphone no longer outputs audio.

During performing of the target input by the user, at least one of the left earphone and the right earphone is in the unworn state. For example, the user may remove the left earphone, or both the left earphone and the right earphone before or during the performing of the target input.

In this implementation, the first electronic device may switch the output mode of the audio based on the target input by the user acting on the wireless earphone. For example, in a case that the first electronic device is in a screen-off state, the user needs to perform a screen-on operation on the first electronic device before performing operations of switching the audio output mode. However, according to the solution provided in this implementation, even if the first electronic device is in the screen-off state, the first electronic device can switch the audio output mode based on the target input by the user acting on the wireless earphone, thereby effectively simplifying the operations of the user, and enabling the first electronic device to perform procedures of switching the audio output mode more convenient and fast.

It may be understood that in a case that the left earphone or the right earphone of the wireless earphone is in the unworn state, but the target input is not received, the first electronic device does not perform switching on the audio output mode. Optionally, this implementation may alternatively be that in a case that the left earphone or the right earphone of the wireless earphone is in the unworn state, and a target input acting on either of the left earphone or the right earphone is received within a preset duration, the output mode of the audio is switched into a mode in which the audio is outputted through a speaker. In this way, mistaken triggering that occurs when the left earphone or the right earphone is in the unworn state for a long time can be avoided, so that accuracy of the operations of switching the audio output mode performed by the first electronic device can further be improved.

Further, after the first electronic device switches the output mode of the audio into the mode in which the audio is outputted through the speaker in response to the target input, in a case that one of the left earphone and the right earphone is still in the unworn state, and the target input by the user acting on the left earphone or the right earphone is received, the first electronic device switches the output mode of the audio into the mode in which the audio is outputted through the wireless earphone. In this way, the first electronic device can switch the audio output mode back and forth between the mode in which the audio is outputted through the wireless earphone and the mode in which the audio is outputted through the speaker based on the target input by the user acting on the wireless earphone, thereby making it more convenient for the user to perform the operations of switching the audio output mode.

It should be noted that the left earphone and the right earphone of the wireless earphone may be each provided with an infrared sensor, a gravity sensor, or the like, to detect wearing states of the left earphone and the right earphone. For a specific detection principle, reference may be made to the related art. Details are not described in this embodiment of the present invention.

In this embodiment the present invention, step 103 may further include:
switching the output mode of the audio into the second audio output mode in response to the target input, and displaying a first target control, where the first target control is used for indicating that the output mode of the audio is switched from the first audio output mode into the second audio output mode.

It should be noted that the target control may be displayed after the output mode of the audio is switched into the second audio output mode, or may be displayed on a display interface of the first electronic device during performing of the target input by the user before the output mode of the audio is switched.

For example, referring to FIG. 1a, in a case that the first electronic device displays a running interface of an instant messaging application, the audio information 11 is voice communication information displayed on the running interface, and the target input is a left-to-right swipe input by a user acting on the voice communication information, during performing of the swipe input by the user, the first electronic device can display the first target control 12 on the current running interface, for example, the first target control 12 indicates that the output mode of the audio is switched from the mode in which the audio is outputted through the wireless earphone into the mode in which the audio is outputted through the speaker. In this way, during the performing of the target input by the user, the user can clearly and intuitively learn which audio output mode the first electronic device will switch into, thereby providing more intuitive reference for the user in performing the target input, and improving user experience of the first electronic device.

In an optional implementation, step 103 may further include:
Switching, in a case that the target input is a first swipe input the output mode of the audio into the second audio output mode in response to the first swipe input.

In this implementation, after step 102, the method further includes:
controlling, in a case that the target input is a second swipe input, the output mode of the audio to be the first audio output mode in response to the second swipe input, where a swipe trajectory of the second swipe input at least partially overlaps a swipe trajectory of the first swipe input.

In this implementation, the first electronic device may perform different responses for different swipe trajectories of the target input. In a case that the target input is the first swipe input, the first electronic device can switch the output mode of the audio from the first audio output mode into the second audio output mode based on the first swipe input. In a case that the target input is the second swipe input, the first electronic device controls the output mode of the audio to be still the first audio output mode, that is, the first electronic device does not switch the output mode of the audio.

For example, the first electronic device displays a running interface of an instant messaging application, the audio information is voice communication information displayed on the running interface, and the first electronic device currently outputs audio through a wireless earphone. If receiving the left-to-right first swipe input by the user acting on the voice communication information, the first electronic device switches the output mode of the audio into the mode in which the audio is outputted through the speaker. If receiving the second swipe input from left to right and then to left of the user acting on the voice communication information, the first electronic device does not switch the output mode of the audio, and still outputs the audio through the wireless earphone.

In this way, the first electronic device can separately perform different responses based on different swipe trajectories of the target input, to or not to perform switching on the output mode of the audio, so that the first electronic device can control the audio output mode more flexible, thereby providing better user experience for the user.

In a case that the target input is the second swipe input, step 102 may further include:
receiving the second swipe input for the audio information, and displaying a second target control, where the second target control is used for indicating indicate that the output mode of the audio is the first audio output mode.

That is, during performing of the second swipe input by the user, the first electronic device may display the second target control on the display interface, where the second target control is used for indicating that the output mode of the audio is still the first audio output mode. In this way, the current second swipe input can be displayed more intuitively and clearly, and the first electronic device is not triggered to perform switching on the audio output mode, to prompt the user more intuitively and effectively and bring better operating experience to the user, thereby avoiding an accidental operation of the user.

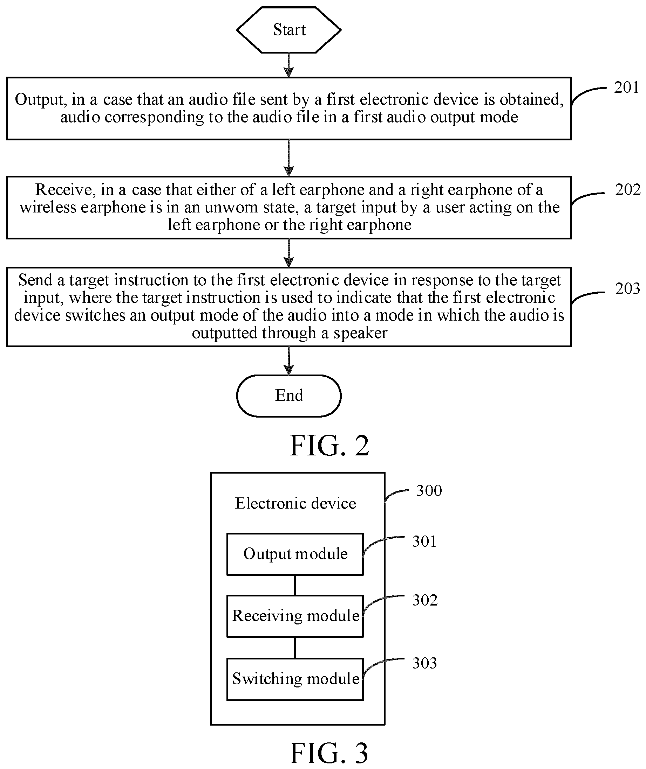

FIG. 2 is a flowchart of another audio output mode switching method according to an embodiment of the present invention. The method provided in this embodiment of the present invention is applied to a wireless earphone. As shown in FIG. 2, the method includes the following steps:
Step 201. Output, in a case that an audio file sent by a first electronic device is obtained, audio corresponding to the audio file in a first audio output mode.

It should be noted that the method provided in this embodiment of the present invention is applied to the wireless earphone such as a Bluetooth earphone, where the Bluetooth earphone may be in a Bluetooth connection with the first electronic device. In this embodiment of the present invention, in a case that the wireless earphone establishes a wireless connection with the first electronic device, audio from the first electronic device is outputted through the wireless earphone.

Step 202. Receive, in a case that either of a left earphone and a right earphone of the wireless earphone is in an unworn state, a target input by a user acting on the left earphone or the right earphone.

Step 203. Send a target instruction to the first electronic device in response to the target input, where the target instruction is used to indicate that the first electronic device switches an output mode of the audio into a mode in which the audio is outputted through a speaker.

It may be understood that the wireless earphone includes a left earphone and a right earphone. In a case that a user removes one of the earphones, for example, the left earphone, the left earphone is in an unworn state. In this case, if the user performs a target input such as a double-click operation on the left earphone or the right earphone, the wireless earphone may send a target instruction to the first electronic device, so that the first electronic device switches, according to the received target instruction, the output mode of the audio into the mode in which the audio is outputted through the speaker. In this case, the wireless earphone no longer outputs audio.

In this way, in a case that the left earphone or the right earphone is in the unworn state, the wireless earphone can send the target instruction to the first electronic device based on the target input by the user, so that the first electronic device performs switching on the output mode of the audio. For example, when the first electronic device is in a screen-off state, the user needs to perform a screen-on operation on the first electronic device before performing operations of switching the audio output mode. However, according to the solution provided in this implementation, even if the first electronic device is in the screen-off state, the first electronic device can switch the audio output mode based on the target input by the user acting on the wireless earphone, thereby effectively simplifying the operations of the user, and enabling the first electronic device to perform procedures of switching the audio output mode more convenient and fast.

Optionally, step 202 may further include:
receiving the target input by the user acting on the left earphone or the right earphone within a preset duration in a case that either of the left earphone and the right earphone of the wireless earphone is in the unworn state.

That is, in a case that the user removes the left earphone or the right earphone and receives the target input acting on the left earphone or the right earphone within the preset duration, the wireless earphone sends the target instruction to the first electronic device, so that the first electronic device switches the output mode of the audio into the mode in which the audio is outputted through the speaker. In this way, mistaken triggering that occurs when the left earphone or the right earphone is in the unworn state for a long time can be avoided, so that accuracy of the operations of switching the audio output mode performed by the first electronic device can further be improved.

Further, after the first electronic device switches the output mode of the audio into the mode in which the audio is outputted through the speaker in response to the target input, in a case that one of the left earphone and the right earphone is still in the unworn state, and the wireless earphone receives the target input by the user acting on the left earphone or the right earphone, a second target instruction is sent to the first electronic device, so that the first electronic device switches, based on the second target instruction, the output mode of the audio into the mode in which the audio is outputted through the wireless earphone. In this way, the wireless earphone can send different instructions to the first electronic device based on the target input by the user, so that the first electronic device can switch the audio output mode back and forth between the mode in which the audio is outputted through the wireless earphone and the mode in which the audio is outputted through the speaker, thereby making it more convenient for the user to perform the operations of switching the audio output mode.

It should be noted that the left earphone and the right earphone of the wireless earphone may be each provided with an infrared sensor, a gravity sensor, or the like, to detect wearing states of the left earphone and the right earphone. For a specific detection principle, reference may be made to the related art. Details are not described in this embodiment of the present invention.

FIG. 3 is a structural diagram of an electronic device according to an embodiment of the present invention. The electronic device is a first electronic device, and the first electronic device is in a wireless connection with a second electronic device. As shown in FIG. 3, the electronic device 300 includes:
an output module 301, configured to display audio information, and output audio corresponding to the audio information in a first audio output mode;
a receiving module 302, configured to receive a target input for the audio information; and
a switching module 303, configured to switch an output mode of the audio to a second audio output mode in response to the target input, where
the first audio output mode is a mode in which the audio is outputted through one of the first electronic device and the second electronic device, and the second audio output mode is a mode in which the audio is outputted through the other of the first electronic device and the second electronic device.

Optionally, the switching module 303 is further configured to:
switch the output mode of the audio into the second audio output mode in response to the target input, and display a first target control, where the first target control is used for indicating that the output mode of the audio is switched from the first audio output mode into the second audio output mode.

Optionally, the switching module 303 is further configured to:
switch, in a case that the target input is a first swipe input, the output mode of the audio into the second audio output mode in response to the first swipe input.

The electronic device 300 further includes:
a control module, configured to control, in a case that the target input is a second swipe input, the output mode of the audio to be the first audio output mode in response to the second swipe input, where
a swipe trajectory of the second swipe input at least partially overlaps a swipe trajectory of the first swipe input.

Optionally, the target input is the second swipe input, and the receiving module 302 is further configured to:
receive the second swipe input for the audio information, and display a second target control, where the second target control is used for indicating that the output mode of the audio is the first audio output mode.

Optionally, the second electronic device is a wireless earphone, and the first audio output mode is a mode in which the audio is outputted through the wireless earphone. The receiving module 302 is further configured to:
receive a target input acting on either of a left earphone and a right earphone of the wireless earphone, where at least one of the left earphone and the right earphone is in an unworn state.

It should be noted that the electronic device 300 can implement the processes of the embodiment of the audio output mode switching method shown in FIG. 1, and the same technical effects can be achieved. To avoid repetition, details are not described herein again.

In this embodiment, the electronic device 300 is the first electronic device. In a case that the first electronic device displays the audio information and outputs the audio in the first audio output mode, the first electronic device switches the output mode of the audio into the second audio output mode if receiving the target input for the audio information, so that the first electronic device can switch, based on the target input, the output mode of the audio into a mode in which the audio is outputted through the first electronic device or a mode in which the audio is outputted through the second electronic device. In this way, a user can switch the audio output mode through merely one target input, which simplifies operations of the user, and enables the electronic device 300 to perform operations of switching the audio output mode more simple and fast.

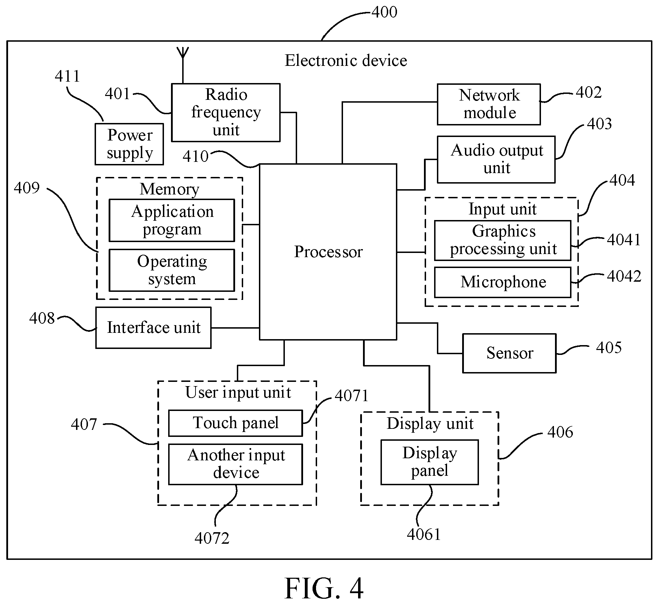

FIG. 4 is a structural diagram of another electronic device for implementing an embodiment of the present invention. An electronic device 400 can implement the processes of the embodiment the audio output mode switching method shown in FIG. 1, and the same technical effects can be achieved. As shown in FIG. 4, the electronic device 400 includes, but not limited to: components such as a radio frequency unit 401, a network module 402, an audio output unit 403, an input unit 404, a sensor 405, a display unit 406, a user input unit 407, an interface unit 408, a memory 409, a processor 410, and a power supply 411. A person skilled in the art may understand that a structure of the electronic device shown in FIG. 4 constitutes no limitation on the electronic device, and the electronic device may include more or fewer components than those shown in the figure, or some components may be combined, or a different component deployment may be used. In the embodiments of the present invention, the electronic device includes, but not limited to, a mobile phone, a tablet computer, a notebook computer, a palm computer, an in-vehicle terminal, a wearable device, and a pedometer.

In this embodiment, the display unit 406 is configured to display audio information; and the audio output unit 403 is configured to output audio corresponding to the audio information in a first audio output mode;
the user input unit 407 is configured to receive a target input for the audio information; and
the processor 410 is configured to switch an output mode of the audio into a second audio output mode in response to the target input, where
the first audio output mode is a mode in which the audio is outputted through one of the first electronic device and the second electronic device, and the second audio output mode is a mode in which the audio is outputted through the other of the first electronic device and the second electronic device.

Optionally, the processor 410 is further configured to:
switch the output mode of the audio into the second audio output mode in response to the target input, and control the display unit 406 to display a first target control, where the first target control is used for indicating that the output mode of the audio is switched from the first audio output mode into the second audio output mode.

Optionally, the processor 410 is further configured to:
switch, in a case that the target input is a first swipe input, the output mode of the audio into the second audio output mode in response to the first swipe input; and
control, in a case that the target input is a second swipe input, the output mode of the audio to be the first audio output mode in response to the second swipe input, where
a swipe trajectory of the second swipe input at least partially overlaps a swipe trajectory of the first swipe input.

Optionally, the target input is the second swipe input. The user input unit 407 is further configured to receive the second swipe input for the audio information. The display unit 406 is further configured to display a second target control, where the second target control is used for indicating that the output mode of the audio is the first audio output mode.

Optionally, the second electronic device is a wireless earphone, and the first audio output mode is a mode in which the audio is outputted through the wireless earphone. The user input unit 407 is further configured to:
receive a target input acting on either of a left earphone and a right earphone of the wireless earphone, where at least one of the left earphone and the right earphone is in an unworn state.

In this embodiment of the present invention, the electronic device 400 is the first electronic device. In a case that the first electronic device displays the audio information and outputs audio in the first audio output mode, the first electronic device switches the output mode of the audio into the second audio output mode if receiving the target input for the audio information, so that the first electronic device can switch, based on the target input, the output mode of the audio into a mode in which the audio is outputted through the first electronic device or a mode in which the audio is outputted through the second electronic device. In this way, a user can switch the audio output mode through merely one target input, which simplifies operations of the user, and enables the electronic device 400 to perform operations of switching the audio output mode more simple and fast.

It should be understood that, in this embodiment of the present invention, the radio frequency unit 401 may be configured to receive and transmit signals in a process of receiving and transmitting information or calls, specifically, to receive downlink data from a base station, then transmit the downlink data to the processor 410 for processing, and additionally, transmit uplink data to the base station. Generally, the radio frequency unit 401 includes, but is not limited to, an antenna, at least one amplifier, a transceiver, a coupler, a low noise amplifier, a duplexer, and the like. In addition, the radio frequency unit 401 can further communicate with a network device and other devices via a wireless communication system.

The electronic device 400 may provide wireless broadband Internet access for the user by using the network module 402, for example, help a user to send and receive an email, browse a web page, and access stream media.

The audio output unit 403 can convert audio data received by the radio frequency unit 401 or the network module 402 or audio data stored in the memory 409 to an audio signal and output the audio signal as sound. Moreover, the audio output unit 403 can further provide audio output related to a specific function performed by the electronic device 400 (for example, call signal reception sound, and message reception sound). The audio output unit 403 includes a loudspeaker, a buzzer, a receiver, and the like.

The input unit 404 is configured to receive audio or video signals. The input unit 404 may include a graphics processing unit (Graphics Processing Unit, GPU) 4041 and a microphone 4042. The graphics processing unit 4041 performs processing on image data of a static picture or a video that is obtained by an image acquisition device (for example, a camera) in a video acquisition mode or an image acquisition mode. The processed image frames may be displayed on the display unit 406. An image frame processed by the graphics processing unit 4041 may be stored in the memory 409 (or another computer-readable storage medium) or sent by the radio frequency unit 401 or the network module 402. The microphone 4042 may receive sound and be able to process such sound as audio data. The processed audio data may be converted to a format output that can be sent to a mobile communication base station via the radio frequency unit 401 in a telephone call mode.

The electronic device 400 further comprises at least one sensor 405 such as an optical sensor, a motion sensor, and other sensors. Specifically, the optical sensor comprises an ambient light sensor and a proximity sensor, where the ambient light sensor may adjust luminance of the display panel 4041 according to the luminance of the ambient light, and the proximity sensor may switch off the display panel 4041 and/or backlight when the electronic device 400 is moved to the ear. As one type of motion sensor, an acceleration sensor may detect magnitude of accelerations in various directions (which generally are triaxial), may detect magnitude and a direction of the gravity when static, and may be configured to identify an electronic device attitude (such as switchover between horizontal and vertical screens, a related game, and attitude calibration of a magnetometer), a related function of vibration identification (such as a pedometer and a knock); and the sensor 405 may further comprise a fingerprint sensor, a pressure sensor, an iris sensor, a molecular sensor, a gyroscope, a barometer, a hygrometer, a thermometer, an infrared sensor, etc., which are not be repeated herein.

The display unit 406 is configured to display information inputted by the user or information provided to the user. The display unit 406 may include a display panel 4061. The display panel 4061 may be configured by using a liquid crystal display (Liquid Crystal Display, LCD), an organic light-emitting diode (Organic Light-Emitting Diode, OLED), or the like.

The user input unit 407 is configured to receive inputted digital or character information, and generate a key signal input related to user settings and function control of the electronic device 400. Specifically, the user input unit 407 includes a touch panel 4071 and another input device 4072. The touch panel 4071, also referred to as a touchscreen, is configured to collect a touch operation made by the user on or in proximity to the touch panel 4071 (for example, an operation made by the user through any appropriate object or attachment (for example, finger or stylus) on or in proximity to the touch panel 4071). The touch panel 4071 may include two parts: a touch detection apparatus and a touch controller. The touch detection apparatus detects a touch orientation of the user, detects a signal brought by the touch operation, and transmits the signal to the touch controller. The touch controller receives touch information from the touch detection apparatus, converts the touch information to a contact coordinate, then transmits the contact coordinate to the processor 410, receives and executes a command transmitted by the processor 410. In addition, the touch panel 4071 may be implemented by using various types, such as a resistive type, a capacitance type, an infrared type, and a surface acoustic wave type. In addition to the touch panel 4071, the user input unit 407 may further include the another input device 4072. Specifically, the another input device 4072 may include, but is not limited to, a physical keyboard, a functional key (such as a volume control key or a switch key), a track ball, a mouse, and a joystick, which are not repeated herein.

Further, the touch panel 4071 may cover the display panel 4041. After detecting a touch operation on or near the touch panel, the touch panel 4071 transfers the touch operation to the processor 410, to determine a type of a touch event. Then, the processor 410 provides a corresponding visual output on the display panel 4041 according to the type of the touch event. Although the touch panel 4071 and the display panel 4041 are used as two separate parts to implement input and output functions of the electronic device 400 in FIG. 4, in some embodiments, the touch panel 4071 and the display panel 4041 may be integrated to implement the input and output functions of the electronic device 400, which is not limited herein.

The interface unit 408 is an interface for connecting an external apparatus to the electronic device 400. For example, the external apparatus may include a wired or wireless headset port, an external power supply (or a battery charger) port, a wired or wireless data port, a storage card port, a port used to connect an apparatus having an identification module, an audio input/output (I/O) port, a video I/O port, an earphone port, and the like. The interface unit 408 may be configured to receive input from the external device (for example, data information and power) and transmit the received input to one or more elements in the electronic device 400, or may be configured to transmit data between the electronic device 400 and the external device.

The memory 409 may be configured to store software programs and various pieces of data. The memory 409 may mainly include a program storage region and a data storage region. The program storage region may store an operating system, an application program (such as a sound play function or an image play function) that is required by at least one function, and the like. The data storage region may store data (such as audio data or a phonebook) that is created according to use of the mobile phone, and the like. In addition, the memory 409 may include a high-speed random access memory, and may further include a nonvolatile memory, such as at least one magnetic disk storage device, a flash memory, or another volatile solid-state storage device.

The processor 410 is a control center of the electronic device 400, and connects to various parts of the entire electronic device 400 by using various interfaces and lines. By running or executing the software program and/or the module stored in the memory 409, and invoking data stored in the memory 409, the processor 410 performs various functions and data processing of the electronic device 400, thereby performing overall monitoring on the electronic device 400. The processor 410 may include one or more processing units. Preferably, the processor 410 may integrate an application processor and a modem processor. The application processor mainly processes an operating system, a user interface, an application program, and the like. The modem processor mainly processes wireless communication. It may be understood that the modem processor may not be integrated to the processor 410.

The electronic device 400 may further include the power supply 411 (such as a battery) for supplying power to the components. Preferably, the power supply 411 may logically connect to the processor 410 by using a power supply management system, thereby implementing functions, such as charging, discharging, and power consumption management, by using the power supply management system.

In addition, the electronic device 400 includes a number of functional modules that are not shown, and details are not described herein again.

Optionally, the embodiments of the present invention further provide an electronic device, including a processor, a memory, and a computer program stored in the memory and executable on the processor, where the computer program, when being executed by the processor, implements the processes of the foregoing embodiments of the audio output mode switching method, and the same technical effects can be achieved. To avoid repetition, details are not described herein again.

The embodiments of the present invention further provide a computer-readable storage medium, storing a computer program, where the computer program, when being executed by a processor, implements the processes of the foregoing embodiments of the audio output mode switching method, and the same technical effects can be achieved. To avoid repetition, details are not described herein again. The computer-readable storage medium is, for example, a read-only memory (Read-Only Memory, ROM), a random access memory (Random Access Memory, RAM), a magnetic disk, an optical disc, or the like.

It should be noted that the term " include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former mode is a better implementation. Based on such an understanding, the technical solutions of the present invention essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of the present invention.

The foregoing descriptions are merely specific implementations of the present invention, but are not intended to limit the protection scope of the present invention. Therefore, the protection scope of the present invention shall be subject to the protection scope of the claims.

## Claims

1. An audio output mode switching method, applied to a first electronic device, the first electronic device being in a wireless connection with a second electronic device, wherein the second electronic device is external to the first electronic device, and the method comprises:
displaying (101) audio information, and outputting audio corresponding to the audio information in a first audio output mode;
receiving (102) a target input for the audio information; and
switching (103) an output mode of the audio into a second audio output mode in response to the target input, wherein
the first audio output mode is a mode in which the audio is outputted through the second electronic device, and the second audio output mode is a mode in which the audio is outputted through a speaker of the first electronic device;
the second electronic device is a wireless earphone;
wherein the receiving (102) a target input for the audio information comprises:
receiving a target input acting on either of a left earphone and a right earphone of the wireless earphone, wherein at least one of the left earphone and the right earphone is in an unworn state.

2. The method according to claim 1, wherein the switching (103) an output mode of the audio into a second audio output mode in response to the target input comprises:
switching the output mode of the audio into the second audio output mode in response to the target input, and displaying a first target control, wherein the first target control is used for indicating that the output mode of the audio is switched from the first audio output mode into the second audio output mode.

3. The method according to claim 1, wherein the switching (103) an output mode of the audio into a second audio output mode in response to the target input comprises:
switching, in a case that the target input is a first swipe input, the output mode of the audio into the second audio output mode in response to the first swipe input; and
after the receiving a target input for the audio information, the method further comprises:
controlling, in a case that the target input is a second swipe input, the output mode of the audio to be the first audio output mode in response to the second swipe input, wherein
a swipe trajectory of the second swipe input at least partially overlaps a swipe trajectory of the first swipe input.

4. The method according to claim 3, wherein the target input is the second swipe input, and the receiving (102) a target input for the audio information comprises:
receiving the second swipe input for the audio information, and displaying a second target control, wherein the second target control used for indicating that the output mode of the audio is the first audio output mode.

5. An electronic device, the electronic device being a first electronic device, the first electronic device being in a wireless connection with a second electronic device, wherein the second electronic device is external to the first electronic device, and the electronic device comprises:
an output module (301), configured to display audio information, and output audio corresponding to the audio information in a first audio output mode;
a receiving module (302), configured to receive a target input for the audio information; and
a switching module (303), configured to switch an output mode of the audio into a second audio output mode in response to the target input, wherein
the first audio output mode is a mode in which the audio is outputted through the second electronic device, and the second audio output mode is a mode in which the audio is outputted through a speaker of the first electronic device;
the second electronic device is a wireless earphone;
the receiving module (302) is further configured to:
receive a target input acting on either of a left earphone and a right earphone of the wireless earphone, wherein at least one of the left earphone and the right earphone is in an unworn state.

6. The electronic device according to claim 5, wherein the switching module (303) is further configured to:
switch the output mode of the audio into the second audio output mode in response to the target input, and display a first target control, wherein the first target control is used for indicating that the output mode of the audio is switched from the first audio output mode into the second audio output mode.

7. The electronic device according to claim 5, wherein the switching module (303) is further configured to:
switch, in a case that the target input is a first swipe input, the output mode of the audio into the second audio output mode in response to the first swipe input; and
the electronic device further comprises:
a control module, configured to control, in a case that the target input is a second swipe input, the output mode of the audio to be the first audio output mode in response to the second swipe input, wherein
a swipe trajectory of the second swipe input at least partially overlaps a swipe trajectory of the first swipe input.

8. The electronic device according to claim 7, wherein the target input is the second swipe input, and the receiving module (302) is further configured to:
receive the second swipe input for the audio information, and display a second target control, wherein the second target control is used for indicating that the output mode of the audio is the first audio output mode.

9. An electronic device, comprising a processor, a memory, and a computer program stored in the memory and executable on the processor, wherein the computer program, when executed by the processor, causes the processor to implement the steps of the audio output mode switching method according to any one of claims 1 to 4.

10. A computer-readable storage medium, storing a computer program, wherein the computer program, when executed by a processor, causes the processor to implement the steps of the audio output mode switching method according to any one of claims 1 to 4.

11. A computer program product executable by at least one processor to implement the audio output mode switching method according to any one of claims 1 to 4.

## Patentansprüche

1. Ein Audioausgabemodus-Umschaltverfahren, angewendet auf ein erstes elektronisches Gerät, wobei das erste elektronische Gerät in einer drahtlosen Verbindung mit einem zweiten elektronischen Gerät steht, wobei das zweite elektronische Gerät extern zu dem ersten elektronischen Gerät ist, und das Verfahren umfasst:
Anzeigen (101) von Audioinformationen und Ausgeben von den Audioinformationen entsprechendem Audio in einem ersten Audioausgabemodus;
Empfangen (102) einer Zieleingabe für die Audioinformationen; und
Umschalten (103) eines Ausgabemodus des Audios in einen zweiten Audioausgabemodus als Reaktion auf die Zieleingabe, wobei
der erste Audioausgabemodus ein Modus ist, in dem das Audio durch das zweite elektronische Gerät ausgegeben wird, und der zweite Audioausgabemodus ein Modus ist, in dem das Audio ausgegeben wird durch einen Lautsprecher des ersten elektronischen Geräts;
das zweite elektronische Gerät ein drahtloser Ohrhörer ist;
wobei das Empfangen (102) einer Zieleingabe für die Audioinformationen umfasst:
Empfangen einer Zieleingabe, die auf einen von einem linken Ohrhörer und einem rechten Ohrhörer des drahtlosen Ohrhörers wirkt, wobei mindestens einer von dem linken Ohrhörer und dem rechten Ohrhörer sich in einem ungetragenen Zustand befindet.

2. Das Verfahren nach Anspruch 1, wobei das Umschalten (103) eines Ausgabemodus des Audios in einen zweiten Audioausgabemodus als Reaktion auf die Zieleingabe umfasst:
Umschalten des Ausgabemodus des Audios in den zweiten Audioausgabemodus als Reaktion auf die Zieleingabe und Anzeigen eines ersten Zielsteuerelements, wobei das erste Zielsteuerelement verwendet wird zum Angeben, dass der Ausgabemodus des Audios von dem ersten Audioausgabemodus in den zweiten Audioausgabemodus umgeschaltet wird.

3. Das Verfahren nach Anspruch 1, wobei das Umschalten (103) eines Ausgabemodus des
Audios in einen zweiten Audioausgabemodus als Reaktion auf die Zieleingabe umfasst:
Umschalten, in einem Fall, dass die Zieleingabe eine erste Wischeingabe ist, des Ausgabemodus des Audios in den zweiten Audioausgabemodus als Reaktion auf die erste Wischeingabe; und
nach dem Empfangen einer Zieleingabe für die Audioinformationen, umfasst das Verfahren ferner:
Steuern, in einem Fall, dass die Zieleingabe eine zweite Wischeingabe ist, des Ausgabemodus des Audios derart, dass er der erste Audioausgabemodus ist, als Reaktion auf die zweite Wischeingabe, wobei
eine Wischtrajektorie der zweiten Wischeingabe zumindest teilweise eine Wischtrajektorie der ersten Wischeingabe.

4. Das Verfahren nach Anspruch 3, wobei die Zieleingabe die zweite Wischeingabe ist, und das Empfangen (102) einer Zieleingabe für die Audioinformationen umfasst:
Empfangen der zweiten Wischeingabe für die Audioinformationen und Anzeigen eines zweiten Zielsteuerelements, wobei das zweite Zielsteuerelement verwendet wird, um anzuzeigen, dass der Ausgabemodus des Audios der erste Audioausgabemodus ist.

5. Ein elektronisches Gerät, wobei das elektronische Gerät ein erstes elektronisches Gerät ist, wobei das erste elektronische Gerät in einer drahtlosen Verbindung mit einem zweiten elektronischen Gerät steht, wobei das zweite elektronische Gerät extern zu dem ersten elektronischen Gerät ist, und das elektronische Gerät umfasst:
ein Ausgabemodul (301), das eingerichtet ist, Audioinformationen anzuzeigen und Audio entsprechend den Audioinformationen in einem ersten Audioausgabemodus auszugeben;
ein Empfangsmodul (302), das eingerichtet ist, eine Zieleingabe für die Audioinformationen zu empfangen; und
ein Umschaltmodul (303), das eingerichtet ist, einen Ausgabemodus des Audios in einen zweiten Audioausgabemodus als Reaktion auf die Zieleingabe umzuschalten, wobei
der erste Audioausgabemodus ein Modus ist, in dem das Audio durch das zweite elektronische Gerät ausgegeben wird, und der zweite Audioausgabemodus ein Modus ist, in dem das Audio durch einen Lautsprecher des ersten elektronischen Geräts ausgegeben wird;
das zweite elektronische Gerät ein drahtloser Ohrhörer ist;
das Empfangsmodul (302) ferner eingerichtet ist zum:
Empfangen einer Zieleingabe, die auf einen von einem linken Ohrhörer und einem rechten Ohrhörer des drahtlosen Ohrhörers wirkt, wobei mindestens einer von dem linken Ohrhörer und dem rechten Ohrhörer in einem nicht getragenen Zustand ist.

6. Das elektronische Gerät nach Anspruch 5, wobei das Umschaltmodul (303) ferner eingerichtet ist zum:
Umschalten des Ausgabemodus des Audios in den zweiten Audioausgabemodus als Reaktion auf die Zieleingabe und Anzeigen eines ersten Zielsteuerelements, wobei das erste Zielsteuerelement verwendet wird zum Anzeigen, dass der Ausgabemodus des Audios von dem ersten Audioausgabemodus in den zweiten Audioausgabemodus umgeschaltet wird.

7. Das elektronische Gerät nach Anspruch 5, wobei das Umschaltmodul (303) ferner eingerichtet ist zum:
Umschalten, in einem Fall, dass die Zieleingabe eine erste Wischeingabe ist, den Ausgabemodus des Audios in den zweiten Audioausgabemodus als Reaktion auf die erste Wischeingabe; und
das elektronische Gerät umfasst ferner:
ein Steuermodul, das konfiguriert ist, um zu steuern, in einem Fall, dass die Zieleingabe eine zweite Wischeingabe ist, dass der Ausgabemodus des Audios der erste Audioausgabemodus als Reaktion auf die zweite Wischeingabe ist, wobei
eine Wischtrajektorie der zweiten Wischeingabe mindestens teilweise eine Wischtrajektorie überlappt der ersten Wischeingabe.

8. Das elektronische Gerät nach Anspruch 7, wobei die Zieleingabe die zweite Wischeingabe ist, und das Empfangsmodul (302) ferner konfiguriert ist zum:
Empfangen der zweiten Wischeingabe für die Audioinformationen und ein zweites Zielsteuerelement anzuzeigen, wobei das zweite Zielsteuerelement verwendet wird zum Angeben, dass der Ausgabemodus des Audios der erste Audioausgabemodus ist.

9. Ein elektronisches Gerät, umfassend einen Prozessor, einen Speicher und ein Computerprogramm das in dem Speicher gespeichert und auf dem Prozessor ausführbar ist, wobei
das Computerprogramm, wenn es durch den Prozessor ausgeführt wird, den Prozessor veranlasst, die Schritte des Audioausgabemodus-Umschaltverfahrens nach einem der Ansprüche 1 bis 4 zu implementieren.

10. Ein computerlesbares Speichermedium, das ein Computerprogramm speichert, wobei
das Computerprogramm, wenn es durch einen Prozessor ausgeführt wird, den Prozessor veranlasst die Schritte des Audioausgabemodus-Umschaltverfahrens nach einem der Ansprüche 1 bis 4 zu implementieren.

11. Ein ausführbares Computerprogrammprodukt, das von mindestens einem Prozessor ausführbar ist, um das Audioausgabemodus-Umschaltverfahren nach einem der Ansprüche 1 bis 4 zu implementieren.

## Revendications

1. Un procédé de commutation de mode de sortie audio, appliqué à un premier dispositif électronique, le premier dispositif électronique étant en connexion sans fil avec un deuxième dispositif électronique, dans lequel le deuxième dispositif électronique est externe au premier dispositif électronique, et le procédé comprend :
afficher (101) des informations audio, et sortir l'audio correspondant aux informations audio dans un premier mode de sortie audio ;
la réception (102) d'une entrée cible pour les informations audio ; et
commuter (103) un mode de sortie de l'audio dans un second mode de sortie audio en réponse à l'entrée cible, dans lequel
le premier mode de sortie audio est un mode dans lequel l'audio est sorti par l'intermédiaire du deuxième dispositif électronique, et le second mode de sortie audio est un mode dans lequel l'audio est sorti par l'intermédiaire d'un haut-parleur du premier dispositif électronique ;
le deuxième dispositif électronique est un écouteur sans fil ;
dans lequel la réception (102) d'une entrée cible pour les informations audio comprend :
recevoir une entrée cible agissant sur l'un ou l'autre d'un écouteur gauche et d'un écouteur droit de l'écouteur sans fil, dans lequel au moins l'un de l'écouteur gauche et de l'écouteur droit est dans un état non porté.

2. Le procédé selon la revendication 1, dans lequel la commutation (103) d'un mode de sortie de l'audio dans un second mode de sortie audio en réponse à l'entrée cible comprend :
commuter le mode de sortie de l'audio dans le second mode de sortie audio en réponse à l'entrée cible, et afficher une première commande cible, dans lequel la première commande cible est utilisée pour indiquer que le mode de sortie de l'audio est commuté du premier mode de sortie audio dans le second mode de sortie audio.

3. Le procédé selon la revendication 1, dans lequel la commutation (103) d'un mode de sortie de l'audio dans un second mode de sortie audio en réponse à l'entrée cible comprend :
commuter, dans un cas où l'entrée cible est une première entrée par balayage, le mode de sortie de l'audio dans le second mode de sortie audio en réponse à la première entrée par balayage ; et
après la réception d'une entrée cible pour les informations audio, le procédé comprend en outre :
commander, dans un cas où l'entrée cible est une deuxième entrée par balayage, le mode de sortie de l'audio pour être le premier mode de sortie audio en réponse à la deuxième entrée par balayage, dans lequel
une trajectoire de balayage de la deuxième entrée par balayage chevauche au moins partiellement une trajectoire de balayage de la première entrée par balayage.

4. Le procédé selon la revendication 3, dans lequel l'entrée cible est la deuxième entrée par balayage, et la réception (102) d'une entrée cible pour les informations audio comprend :
recevoir la deuxième entrée par balayage pour les informations audio, et afficher une deuxième commande cible, dans lequel la deuxième commande cible utilisée pour indiquer que le mode de sortie de l'audio est le premier mode de sortie audio.

5. Un dispositif électronique, le dispositif électronique étant un premier dispositif électronique, le premier dispositif électronique étant en connexion sans fil avec un deuxième dispositif électronique, dans lequel le deuxième dispositif électronique est externe au premier dispositif électronique, et le dispositif électronique comprend :
un module de sortie (301), configuré pour afficher des informations audio, et sortir un audio correspondant aux informations audio dans un premier mode de sortie audio ;
un module de réception (302), configuré pour recevoir une entrée cible pour les informations audio ; et
un module de commutation (303), configuré pour commuter un mode de sortie de l'audio dans un deuxième mode de sortie audio en réponse à l'entrée cible, dans lequel
le premier mode de sortie audio est un mode dans lequel l'audio est sorti par l'intermédiaire du deuxième
dispositif électronique, et le deuxième mode de sortie audio est un mode dans lequel l'audio est sorti par l'intermédiaire d'un haut-parleur du premier dispositif électronique ;
le deuxième dispositif électronique est un écouteur sans fil ;
le module de réception (302) est en outre configuré pour :
recevoir une entrée cible agissant sur l'un quelconque d'un écouteur gauche et d'un écouteur droit de l'écouteur sans fil, dans lequel au moins l'un de l'écouteur gauche et de l'écouteur droit est dans un état non porté.

6. Le dispositif électronique selon la revendication 5, dans lequel le module de commutation (303) est en outre configuré pour :
commuter le mode de sortie de l'audio dans le deuxième mode de sortie audio en réponse à l'entrée cible, et afficher une première commande cible, dans lequel la première commande cible est utilisée pour indiquer que le mode de sortie de l'audio est commuté du premier mode de sortie audio dans le deuxième mode de sortie audio.

7. Le dispositif électronique selon la revendication 5, dans lequel le module de commutation (303) est en outre configuré pour :
commuter, dans un cas où l'entrée cible est une première entrée par balayage, le mode de sortie de l'audio dans le second mode de sortie audio en réponse à la première entrée par balayage ; et
le dispositif électronique comprend en outre :
un module de commande, configuré pour commander, dans un cas où l'entrée cible est une deuxième entrée par balayage, le mode de sortie de l'audio comme étant le premier mode de sortie audio en réponse à la deuxième entrée par balayage, dans lequel
une trajectoire de balayage de la deuxième entrée par balayage chevauche au moins partiellement une trajectoire de balayage de la première entrée par balayage.

8. Le dispositif électronique selon la revendication 7, dans lequel l'entrée cible est la deuxième entrée par balayage, et le module de réception (302) est en outre configuré pour :
recevoir la deuxième entrée par balayage pour les informations audio, et afficher une deuxième commande cible, dans lequel la deuxième commande cible est utilisée pour indiquer que le mode de sortie de l'audio est le premier mode de sortie audio.

9. Un dispositif électronique, comprenant un processeur, une mémoire et un programme informatique stocké dans la mémoire et exécutable sur le processeur, dans lequel
le programme informatique, lorsqu'il est exécuté par le processeur, amène le processeur à mettre en œuvre les étapes du procédé de commutation de mode de sortie audio selon l'une quelconque des revendications 1 à 4.

10. Un support de stockage lisible par ordinateur, stockant un programme informatique, dans lequel
le programme informatique, lorsqu'il est exécuté par un processeur, amène le processeur à mettre en œuvre les étapes du procédé de commutation de mode de sortie audio selon l'une quelconque des revendications 1 à 4.

11. Un produit-programme d'ordinateur exécutable par au moins un processeur pour mettre en œuvre le procédé de commutation de mode de sortie audio selon l'une quelconque des revendications 1 à 4.
